Europäisches Patentamt

European Patent Office

Office européen des brevets

(19)

(11) Veröffentlichungsnummer: **0 284 562**
**A2**

(12) ## EUROPÄISCHE PATENTANMELDUNG

(21) Anmeldenummer: 88810167.2

(22) Anmeldetag: 16.03.88

(51) Int. Cl.⁴: **F 21 Q 3/00**
**B 64 F 1/18, E 01 F 9/04**

(30) Priorität: 16.03.87 CH 974/87

(43) Veröffentlichungstag der Anmeldung:
28.09.88 Patentblatt 88/39

(84) Benannte Vertragsstaaten:
**AT BE DE FR IT NL SE**

(71) Anmelder: **META-FER AG**
**Fabrikstrasse 10**
**CH-9470 Buchs (CH)**

(72) Erfinder: **Vadseth, Jan E.**
**Joachimsbüel**
**CH-9475 Sevelen (CH)**

(74) Vertreter: **Büchel, Kurt F., Dr.**
**Patentanwalt Dr. Kurt F. Büchel Bergstrasse 297**
**FL-9495 Triesen (LI)**

(54) **Beleuchtungsvorrichtung für Fahr- oder Rollbahn.**

(57) Die Beleuchtungsvorrichtung, insbesondere für den Einbau in einer Fahr- oder Rollbahn (29) an Flugplätzen, Strassen o.dgl. (Rollbahn) besitzt eine in einem Gehäuse angeordneten Lichtquelle (3) und einen von der Lichtquelle (3) durchstrahlten glasartigen Deckel (1,2) für das Abstrahlen von zumindest eines winkelgenormten Leuchtkegels, wobei der Deckel (1,2) mit seiner Lichtaustrittsfläche im wesentlichen in einer Ebene mit der Oberfläche der Rollbahn (29) liegt. Die Lichteintrittsfläche (30) ist einteilig und in einer einzigen Ebene liegend ausgebildet ist, wobei die Lichtquelle (3) mit einem Reflektor (4) versehen ist, der im wesentlichen parallele Lichtstrahlen abzustrahlen vermag. Die Lichteintrittsfläche (39) kann einen Anschliff (30a-d) für gezielte Streuung in horizontaler Ebene aufweisen. Der Reflektor (4) ist mit der Lichtquelle (3) derart angeordnet, dass die Lichtstrahlen in einem im wesentlichen rechten Winkel durch die Ebene der Lichteintrittsfläche (30) treten. Der Deckel (1,2) ist in mehrere voneinander durch je eine klebende, parallel zur Lichtrichtung verlaufende Trennschicht (38) getrennte Scheiben (10) unterteilt.

Fig.1

EP 0 284 562 A2

**Beschreibung**

## BELEUCHTUNGSSVORRICHTUNG FUER FAHR- ODER ROLLBAHNEN

Die Erfindung betrifft eine Beleuchtungsvorrichtung nach dem Oberbegriff des Anspruches 1.

Derartige Beleuchtungsvorrichtungen werden in erster Linie zur Signalgebung für startende oder landende Flugzeuge verwendet. Die Beleuchtungsvorrichtungen sollen derart in die Fahrbahnen bzw. Rollbahnen eingebaut werden, dass sie, ohne Schaden zu nehmen, überfahren bzw. überrollt werden können. Der durchsichtige Deckel hat die Aufgabe, die von der Lichtquelle erzeugten Lichtstrahlen in eine bestimmte Richtung zu brechen. Der Leuchtkegel derartiger Beleuchtungsvorrichtungen ist - zumindest für den Flugverkehr - genormt. Für die unterschiedlichsten Anwendungen sind dabei unterschiedlichste Leuchtkegel vorgesehen, die mit sehr geringen Toleranzen eingehalten werden müssen, um beim Flugverkehr ein möglichst hohes Mass an Sicherheit zu gewährleisten.

Zur Erreichung der spezifischen Leuchtkegel können theoretisch verschiedene Massnahmen getroffen werden, die in der Praxis - zumindest alleine - häufig nicht genügen. Solche Massnahmen betreffen entweder den Deckel selber, oder die Glühbirne oder aber den Reflektor der Lichtquelle. Weltweit wurden insgesamt schon viele Versuche unternommen, um die Leuchtkegelformen zu optimieren.

Beispielsweise sei auf die deutsche Patentschrift 1183455, die US Patentschrift 3096024, die britische Patentschrift 966357, die europäische Patentschrift 22106 und die schwedische Offenlegungsschrift 449600 verwiesen. Darüberhinaus sei noch die Schweizer Patentschrift 553686 angeführt.

Besonders für jene Beleuchtungsvorrichtungen, die in sehr geringem Winkel zur Fahrbahnoberfläche abstrahlen sollen, schien seit den frühen Tagen der Massenluftfahrt die Ausbildung der Beleuchtungsvorrichtung entsprechend dem Oberbegriff des Anspruches 1 ideal. Wie z.B. aus der erwähnten deutschen Patentschrift ersehen werden kann, werden die von der Lichtquelle erzeugten Lichtstrahlen, bedingt durch den Brechungsindex und die prismenförmige Ausbildung des Deckels bzw. der Deckel, in einem sehr flachen Winkel zur Rollbahnoberfläche abgestrahlt. Bedingt durch die Eigenheiten des Glases (teilweise Totalreflexion im Inneren usw.) ergaben sich jedoch im Randbereich, vor allem bei flachem Abstrahlwinkel unerwünschte bzw. unberechenbare Streuungen, so dass derartige Konstruktionen noch nicht dem Wunsche entsprachen.

Man ging vielmehr auf jene - schon früher bekannte - Ausge-staltung zurück, bei der ein prismenförmiger Glaskörper - nachteiligerweise aus der Ebene der Rollbahn herausragend - einen zur Oberfläche des Glaskörpers relativ geringen Abstrahlwinkel der Lichtstrahlen und einen relativ kurzen Weg derselben im Glaskörper erlaubte, was die glasbedingte Streuung reduzierte. Der Nachteil einer derartigen Ausbildung bestand allerdings in seiner Erhabenheit über der Rollbahnoberfläche und in den damit verbundenen Störungen, z.B. beim Ueberfahren durch einen Schneepflug.

Um diese Nachteile zu umgehen, wurden verschiedene andere Konstruktionen versucht, wie beispielsweise der erwähnten US und der britischen Patentschrift entnommen werden kann.

Beide Leuchten zeigten eine stufenförmige Ausbildung der Lichteintrittsfläche des durchsichtigen Deckels, wodurch die Lichtwege im Glas gering und über die gesamte Erstreckung des Deckels konstant blieben. Die unkontrollierte Totalreflexion im Inneren des Glases stört aber selbst bei diesem Aufbau die Bildung eines einwandfreien Leuchtkegels.

Erst eine Ausbildung des durchsichtigen Deckels entsprechend der zitierten europäischen Patentschrift brachte es zuwege, die Reflexion in den gewünschten Winkelbereichen über der Rollbahnoberfläche streufrei zu gestalten.

Die Reflexion innerhalb des Glases wurde dadurch verringert, bzw. in eine bestimmte Richtung gezwungen, dass der Deckel in zusammengeklebte Einzelscheiben unterteilt war, wobei die Klebestellen im wesentlichen lichtundurchlässig waren. waren. Gelehrt durch die Erfahrung wollte man dabei durch die abgestufte Ausbildung der Lichteintrittsfläche (ähnlich der Lehre der US PS) die Lichtwege im Glas möglichst kurz halten. Durch diese gestufte Ausbildung mussste man allerdings unter anderem zwei Nachteile in Kauf nehmen: Zum einen konnten Lichtstrahlen aus der Lichtquelle dann nicht vom Deckel "eingefangen" werden, wenn sie in einem zu grossen Winkel von der Normalen auf die Lichteintrittsfläche auftrafen. Entweder wurden solche Lichtstrahlen von der Lichteintrittsfläche in das Gehäuse (zurück) reflektiert, oder sie erreichten die Lichteintrittsfläche gar nicht, sondern strahlten daran wirkungslos vorbei, was insbesondere in weiter entfernten Bereichen der Lichteintrittsfläche von der Lichtquelle eine Rolle spielen konnte. Nachteiligerweise war aber gerade dieser Bereich für die relativ zur Rollbahn tiefstliegenden Lichtstrahlen verantwortlich, die beim genormten Leuchtkegel jedoch eine wichtige Rolle spielen und keinesfalls abgeschwächt sein sollten.

Zum anderen konnte es auch im Winkelbereich der Stufen zu unerwünschten Reflexionen und Streuverlusten kommen. Darüberhinaus ist bei sämtlichen Deckeln mit gestufter Lichteintrittsfläche ein Nachteil in produktionstechnischer Hinsicht gegeben. Die stufenförmige Ausbildung der Lichteintrittsfläche verhindert die Möglichkeit, die einzelnen Lichteintrittssegmente zu polieren. Sie können zwar naturgemäss schon vor dem Zusammenbau poliert sein, jedoch können beim Verkleben der Einzelscheiben beispielsweise Klebstoff oder sonstige Verunreinigungen an den Lichteintrittsstufenflächen haften, die sodann praktisch nicht mehr entfernt werden können, wodurch sich bei der Produktion ein relativ grosser Ausfall ergeben kann.

Die Erfindung stellt sich daher die Aufgabe, eine Beleuchtungsvorrichtung zu schaffen, die alle erwähnten Nachteile vermeidet, die produktionstechnisch einfach herstellbar ist, die unerwünschte Streuung auf ein Minimum reduziert und die nachträglich auch an ihrer Lichteintrittsfläche problemlos in einem einzigen Arbeitsgang geschliffen oder poliert werden kann.

Darüberhinaus soll zwischen dem lichtdurchlässigen Deckel und der Lichtquelle möglichst wenig Streulicht entstehen, um die Lichtausbeute so gross als möglich zu gestalten.

Durch die Merkmale des Anspruches 1 werden alle diese Ziele erstmals miteinander vereint erreicht. Darüber hinaus ergibt sich aus der neuen Deckelform bzw. durch die breiteren Seitenflächen eine bessere Montagemöglichkeit, bzw. eine höhere Kraftübertragung zwischen dem Deckel und dem Gehäuse, so dass auch schwerste Druckbelastungen auf den Deckel problemlos an das Gehäuse und damit auf die Fahrbahn, bzw. auf den Untergrund übertragen werden können. Schliesslich werden durch die erfindungsgemässe Ausgestaltung allenfalls auftretende schräge Lichtstrahlen an der Lichteintrittsfläche trotzdem gut vom Deckel aufgenommen und zum Abstrahlen gebracht, da der Abstand vom Deckel zur Glühirne bzw. zur Lichtquelle sehr gering und ausserdem über die gesamte Lichteintrittsfläche konstant ist. Somit ist auch in den niedrigen Abstrahlbereichen eine ausreichende Leuchtstärke vorhanden, wodurch sich Bodennebel oder dgl. besser durchdringen lassen. Gleichzeitig wird sinnlos abgestrahltes Licht (z.B. unter einem Winkelgrad zur Rollbahn bzw. Fahrbahnoberfläche) zurückgehalten bzw. in einen grösseren Abstrahlwinkel überführt.

Weitere vorteilhafte Ausbildungen der Erfindung sind in den Merkmalen der Unteransprüche beschrieben.

Eine Beleuchtungsvorrichtung sollte aber auch bei möglichst geringer Baugrösse der Beleuchtungsvorrichtungen das Abstrahlen von Licht bzw. Leuchtkegeln in einander entgegengesetzte Richtung ermöglichen. Unter anderem in Beleuchtungsvorrichtungen beispielsweise entsprechend der erwähnten schwedischen Offenlegungsschrift wird diese Aufgabe gelöst, indem zwei miteinander einstückig verbundene Umlenkprismen unterhalb des durchsichtigen Deckels angeordnet wurden und dieser durch seine um 180° versetzte, gestufte Ausbildung an der Lichteintrittsseite für das Abstrahlen der Leuchtkegel in beide Richtungen ausgebildet war. Eine einzige Glühbirne mit einem einzigen Reflektor sorgte für das Erzeugen des Lichtes. Die beiden Umlenkprismen brachen die Lichtstrahlen und warfen sie gegen die gestufte Lichteintrittsfläche des Deckels, aus dem sie dann in dem gewünschten Winkel austraten. Die Ausbildung erhöhte jedoch sodann wieder die unerwünschte Streuung, wenn der Deckel nicht so lamellenförmig unterteilt war, wie dies bei der europäischen Patentschrift vorgeschrieben war.

Der grosse Aufwand für die mehreren Präzisions-Glaskörper bzw. für die genaue Relativanordnung der Umlenkprismen zum Deckel bei einer der schwedischen Offenlegungsschrift entsprechenden Beleuchtungsvorrichtung machte dieselbe relativ ununwirtschaftlich. Ausserdem fallen bei dem Ausfall der einzigen Glühbirne gleichzeitig beide Leuchtkegel aus, wodurch die Wirkungsweise der Beleuchtungsvorrichtung schlagartig um 100 % reduziert ist.

Dieses Problem wird durch die Merkmale des Anspruches 2 gelöst. Diese erfindungsgemässe Variante ist energietechnisch sparsam im Betrieb und benötigt nur wenig Platz.

Die Ausbildung nach Anspruch 3 reduziert die Beschädigungsgefahr auch bei rauhem Betrieb, z.B. durch Schneepflüge, wobei die stromlinienförmige Ausbildung grösstenteils das Abschleifen der Oberfläche der Deckel durch Staub oder Sandpartikeln verhindert, die durch Austrittgase von Düsentriebwerken über die Piste gefegt werden.

Für bestimmte Fälle wurde eine gezielte Streuung von Licht in seitliche Streubereiche in einem bestimmten, von der Hauptrichtung divergierenden Winkel gefordert. Eine solche Streuung wird erfindungsgemäss durch die Variante nach Anspruch 4 erzielt. Die Ausbildung des Schliffes nur im mittleren Bereich hat den Vorteil, dass aus dem leuchtstärksten Bereich etwas Licht für die Randbereiche abgezweigt wird, was der Gleichmässigkeit des Leuchtkegels entgegenkommt.

Zur Verbesserung der Wärmeleitfähigkeit können dem Kleber auch metallische Beimengungen, z.B. Aluminiumpulver, vorzugsweise von kleinstmöglicher Korngrösse, beigegeben sein. Zwischen den Einzelscheiben des Prismenrasters können auch entsprechend dem Anspruch 5 dünne Metallfolien zur Verbesserung des Lichtaustritteffektes wie auch zur Verbesserung der thermischen Wärmeableitung vorgesehen sein. Es kommen dafür insbesondere Gold, Silber und Aluminium bzw. antikorrosive Legierungen daraus in Frage. Die Aluminiumfolien sind vorzugsweise 1/10 mm dick, hart und glatt. Die Metallfolien können auch verschiedene Stärken aufweisen. Ausserdem können sie seitlich aus dem Prismenraster herausragen, um gegebenenfalls umgebogen direkt mit dem Metall des Prismenhalters zu kontaktieren. Die Folien leiten somit in idealer Form Wärme aus dem Prisma ab und können damit Dehnspannungen ausgleichen.

Das Einkleben der Prismenraster mit einem Einkomponentenkleber führt unter Anwendung der weiteren Merkmale des Anspruches 6 zu einer hervorragenden Stabilität des Prismenhalters und zu einer unübertroffenen Dichtheit, wobei die Einzelscheiben der Deckel in chemischer Hinsicht vorteilhafterweise mit dem gleichen Kleber verbunden werden. Die Abschrägung von 45° nützt die Zugscherfestigkeit des Klebers für gute Haftung bei Druck von oben aus.

Der Kleber kann weiss oder gefärbt ausgebildet sein, wobei weiss am wenigsten Lichtenergie schluckt, schwarz jedoch ideal für das Verhindern von Lichtabstrahlungen durch die Klebeschicht ist, bzw. verhindert, dass irgendwelche Lichtstrahlen in ungewünschtem Winkel abgestrahlt werden können. Sie werden schon vorher in Wärme umgewandelt. Einfärbung mit anderen Farben kann die Färbung des abgestrahlten Lichtes in gewünschtem Umfang beeinflussen (z.B. rot, grün, blau, usw.).

Eine Filterscheibe gemäss der Variante nach Anspruch 7 erlaubt, das Licht entsprechend den Bedürfnissen einzufärben, oder schädliche Wärmestrahlen vom Deckel fernzuhalten, was insbesondere bei hohen Lichtleistungen und langer Strahlungsdauer praktisch sein kann. Eine gasdichte Trennung, oder ein Vakuum verhindert darüber hinaus das Übertragen von Konvektionswärme der Lichtquelle auf den Deckel.

Die Reduktion der Erwärmung des Deckels ist auch Aufgabe des Reflektors gemäss Anspruch 8, wobei der erfindungsgemässe Reflektor ein einfaches auf dem Markt erhältliches Massenprodukt ist. Herkömmliche Reflektoren für Flugfeldbeleuchtungen sind oft teure Spezialanfertigungen, die durch ihre spezielle Formgebung Einfluss auf den Leuchtkegel nehmen. Diese Einflussnahme ist bei der Erfindung , insbesondere nach den Ansprüchen 1,2 und 4 überflüssig.

Die Ansprüche 9 und 10 geben vorteilhafte Montageelemente an, die einerseits abdichten und andererseits ein dynamisches Nachgeben ohne Drehrichtungsänderung erlauben. Das Austauschen von ausgebrannten Lampen, oder von anderen Teilen der Beleuchtungsvorrichtung kann sehr schnell erfolgen.

Die Verwendung einer Beleuchtungsvorrichtung entsprechend der Erfindung bringt im täglichen Strassenverkehr verschiedenste Vorteile, wie z.B. die Einsparung von Säulen oder Oberleitungsverspannungen; ausserdem wird die Aufmerksamkeit eines Autofahrers üblicherweise stets von der Fahrbahn mehr in Anspruch genommen, als von Signalen in der Höhe. Aber natürlich können erfindungsgemässe Beleuchtungsvorrichtungen auch für herkömmliche Anstrahlzwecke, wie z.B. für die Werbung oder Beleuchtung von Monumenten o.dgl. verwendet werden, wobei sie bei solchen Einsätzen gegenüber anderen Lösungen das Sichtfeld nicht zu beeinträchtigen vermögen.

An Hand der Zeichungen wird die Erfindung beispielhaft näher erläutert. Es zeigen dabei

Fig. 1 einen Beleuchtungskörper mit zwei gegeneinander gerichteten flachen Prismenrastern, geschnitten im Aufriss;

Fig. 2 die Draufsicht dazu;

Fig. 3 einen geringfügig unterschiedlich ausgestalteten Beleuchtungskörper in einem Zustand vor der Montage, im im Schrägriss;

Fig. 4 ein Detail der Oberflächenausbildung des Prismenhalters

Fig. 5 ein Detail der Verriegelung im Schnitt;

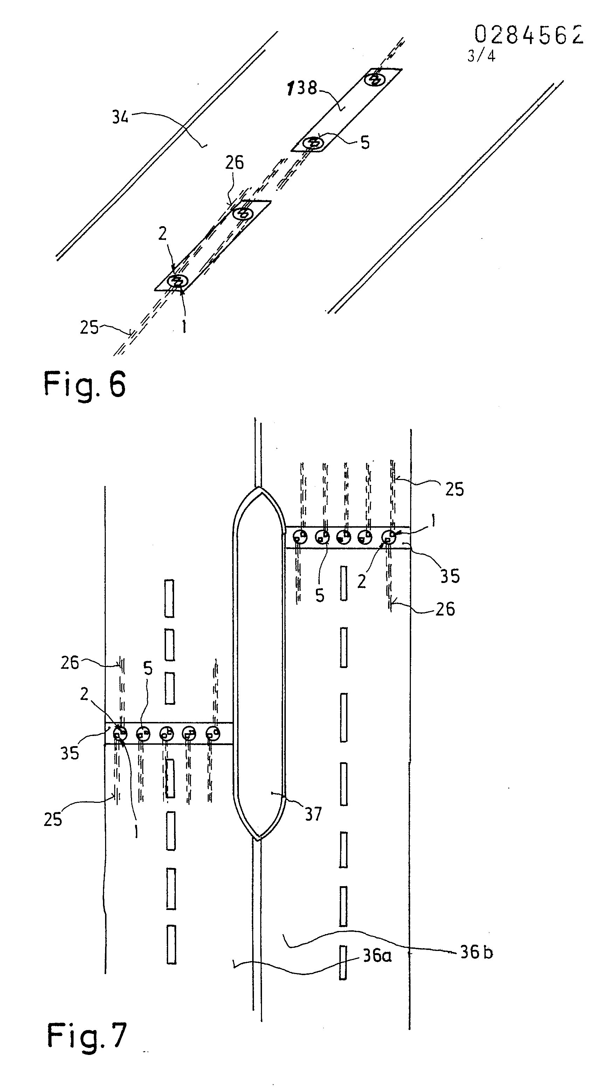

Fig. 6 und 7 Varianten einer möglichen Verwendung;

Fig. 8 einen Deckel mit Schliff und Filter im Schnitt nach der Linie VIII, VIII der Fig.9;

Fig. 9 einen Schnitt nach der Linie IX, IX der Fig.8;

Fig.10 bis 12 Varianten eines Deckels mit verschiedenen Schliffen ähnlich der Schnittdarstellung von Fig.9;

Fig.13 einen Schnitt durch den Deckel nach der Linie XIII, XIII der Fig.9.

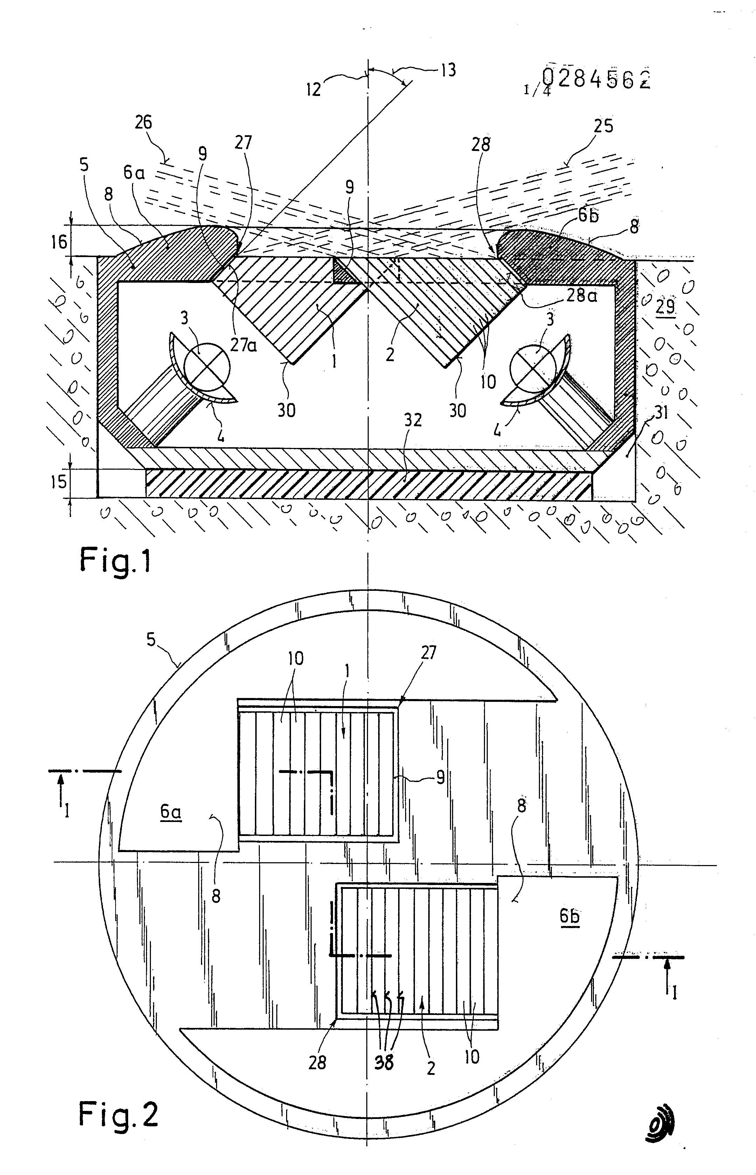

Die schematische Darstellung eines Beleuchtungskörpers mit flachem Lichtaustritt in Fig.1 zeigt einen topfförmig ausgebildeten Prismenhalter 5, der in nicht näher dargestellter Weise zerlegbar ist. Der Prismenhalter 5 besitzt an seiner Oberseite zwei Oeffnungen 27 und 28, die mit ihren Aufnahmeflächen 27a und 28a zwei als transparente Deckel ausgebildete Prismenraster 1 und 2 aufnehmen (im folgenden Prismenraster genannt).

Zum Zwecke der dauerhaften und luftdichten Verbindung ist zwischen den Prismenrastern 1 und 2 und den Aufnahmeflächen 27a und 28a ein Einkomponentenklebstoff 9 auf Epoxybasis aufgebracht. Der Kleber 9 verfügt über eine gute Elastizität, ausgezeichnete Haftung und gute Alterungsbeständigkeit.

Die Aufnahmeflächen 27a bzw. 28a verlaufen in einem Winkel 13 von 45° zur Lotrechten 12. Dieser Winkel 13 ergibt sich in direkter Abhängigkeit von den Brechungseigenschaften des Glases der Prismenraster, des Lichteintrittwinkels, sowie des gewünschten Lichtaustrittswinkels an der Oberläche der Prismenraster. Ausserdem wird durch einen solchen Winkel 13 auch die Zugscherfestigkeit des Klebers zur Druckübertragung vom Prismenraster auf den Prismenhalter gut ausgenutzt.

Die Prismenraster 1,2 bestehen aus miteinander verklebten Borosilikatglasscheiben 10.

Dazwischen könnten, wie aus Fig.13 ersichtlich, Metallfolien (39) zur besseren Reflexion zwischen den Scheiben 10 und zur besseren Wärmeabfuhr aus den Prismenrastern 1,2 in den Prismenhalter 5 mit eingeklebt sein. Die Enden der Metallfolien 39 sind umgebogen und mit dem Prismenhalter verklemmt und verklebt, wodurch sich eine gute Wärmeleitung ergibt. Die Wärme im Prismenraster 1,2 entsteht durch die teilweise Umwandlung von Licht in Wärme im an sich gut isolierenden Glas. Wird sie nicht in ausreichendem Masse abgeführt, so kann der Raster Schaden nehmen.

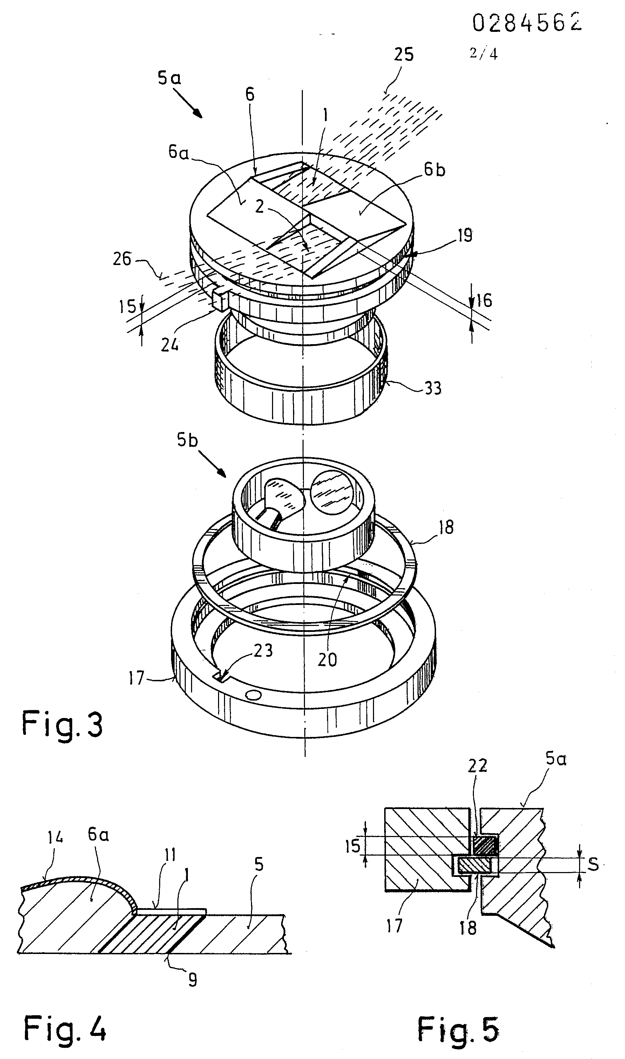

Zum Schutz der Oberseite der Prismenraster 1 und 2 ist die Oberfläche der Oberseite des Prismenhalters 5 in Richtung zu den Prismenrastern 1 und 2 an den den Lichtstrahlen 25 und 26 abgewandten Seiten keilförmig (Fig.3 ) oder stromlinienförmig (Fig.1) ansteigend ausgebildet. Diese keilförmigen Erhebungen 6a, 6b setzen sich auch seitlich der Prismenraster 1, 2 fort, wie der Fig. 2 besser entnommen werden kann. Die Höhe 16 der Erhebungen 6a, 6b ist höchstens 1-5 mm. Die Oberfläche 8 der keilförmigen Erhebungen 6a, bzw. 6b ist stromlinienförmig ausgebildet, wodurch das Schleifen von Flugsand oder dgl. bei hohen Windgeschwindigkeiten, z.B. durch Düsenschub, auf der Oberseite der Prismenraster 1, 2 praktisch unterbunden wird.

In dem Prismenhalter 5, etwa unterhalb der Prismenraster 1 und 2, sind zwei Lichtquellen 3 mit je einem Parabolreflektor 4 vorgesehen. Sie senden ihre Lichtstrahlen in etwa senkrechter Richtung auf die Lichteintrittsflächen 30 der Prismenraster 1 und 2.

Der Prismenhalter 5 ist in einer Ausnehmung 31 in einer Rollbahn bzw. Fahrbahn 27 derart eingesetzt, dass lediglich die Erhebungen 6a und 6b die Oberseite der Fahrbahn 29 überragen. Zwischen der Unterseite des Prismenhalters 5 und dem Untergrund der Fahrbahn 29 ist eine elastische Schicht 32 aus Integralschaumstoff vorgesehen (Fig.1). Wird auf den Prismenhalter 5, bzw. auf dessen Oberseite, insbesonders auf die Erhebungen 6a und 6b, Kraft ausgeübt, so kann der Prismenhalter 5 - bedingt durch die Elastizität der Schicht 32 - geringfügig nach unten ausweichen. Durch nicht dargestellte Mass nahmen ist verhindert, dass sich der Prismenhalter 5 weiter aus der Ausnehmung 31 heraushebt als um die Höhe 16, die durch die maximale Höhe der Erhebungen 6a, bzw. 6b definiert ist. Die Schicht 32 besitzt eine Dicke 15, die der Höhe 16 entspricht. Die Integral-Ausbildung der Schicht verhindert das Eindringen von Wasser in die Poren des Schaumstoffes, wodurch die Schicht stets funktionstüchtig bleibt.

Die Stromversorgung der Lichtquellen 3 ist nicht näher dargestellt, erfolgt jedoch durch ein wasserdicht eingeführtes Stromkabel, das vorteilhafterweise in einen nicht dargestellten, an sich bekannten Hohlraum mit einer Domausbildung an der Unterseite des Prismenhalters eintritt.

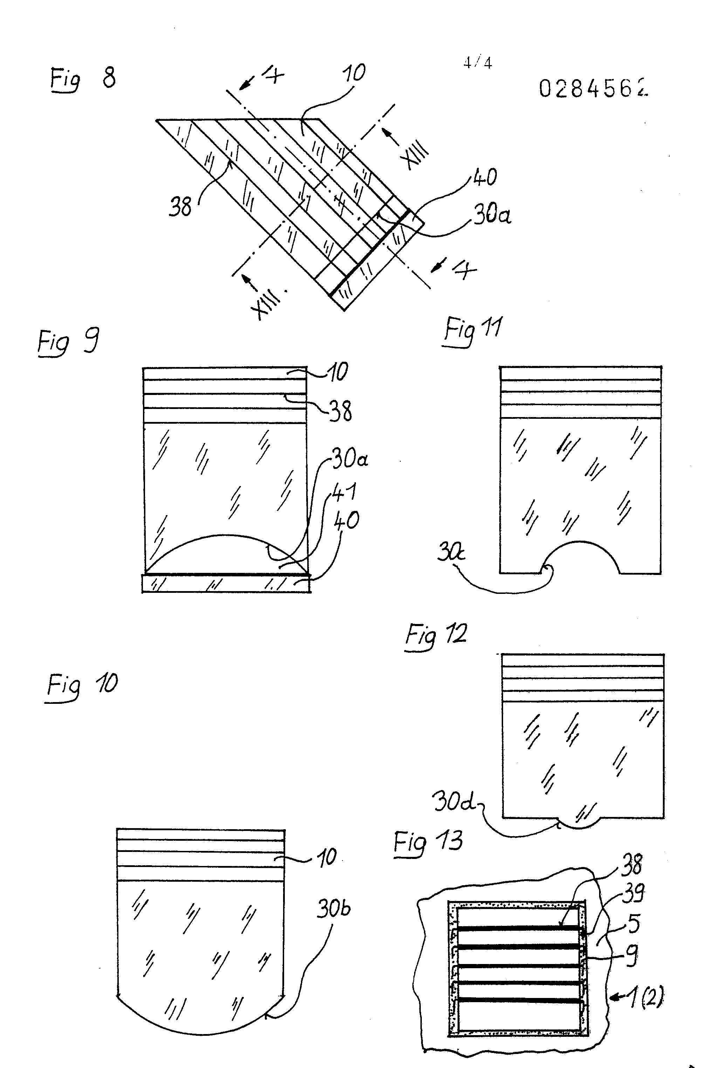

Um eine speziell gerichtete Streuung der Lichtaustrittswinkel zu erreichen, ist der Prismenraster an seiner der Lichtquelle 3 zugewandten Seite bzw. an seiner Lichteintrittsfläche 30 mit einem konkaven oder konvexen Anschliff 30a,c oder b,d (Fig.8,9,11 oder 10,12) versehen, sodass die an sich parallelen Lichtstrahlen aus dem Parabolreflektor in die gewünschte Richtung gestrahlt bzw. abgelenkt werden. Der Anschliff kann auch in mehrere Anschliffe mit unterschiedlichen Radien unterteilt werden. Dabei soll der Einstrahlwinkel am Anschliff 30 so gewählt sein, dass der Ausstrahlwinkel der betreffenden Strahlen an der Lichtaustrittsfläche der Prismenraster 1,2 gleich ist, bzw, dass beide Winkel dem gewünschten Streuwinkel in horizontaler Richtung entsprechen. Die angegebenen Anschliffformen sind die, die in der Praxis häufig vorkommen werden. Es liegen im Rahmen der Erfindung aber auch ebene Anschliffe oder Facettenschliffe, mit denen man ganz spezielle Streumuster erreichen kann, was allerdings in optischen Berechnungen oder Versuchen determiniert werden muss. Jedenfalls erspart der erfindungsgemässe Anschliff zusätzliche Vorschaltsysteme wie Linsen oder Prismen.

Der Anschliff könnte auch geteilt sein, um einerseits die gewünschte Streuung in horizontaler Ebene und andererseits eine gleichmässigere Lichtverteilung im Leuchtkegel zu erzielen. Dies ist von Bedeutung, wenn die von der Lichtquelle gelieferte Lichtdichte stark unterschiedlich ist (z.B. in der Mitte der Lichtstrahlen). Die Zweiteilung kann z.B. so sein, dass ein konvexer Schliff 30b gemäss Fig.10 vorgesehen ist, der in der Mitte einen kleineren konkaven Anschliff 30c 30c gemäss Fig.11 trägt oder umgekehrt.

Wird zwischen der Lichtquelle 3 und der Lichteintrittsfläche 30 noch ein Filter 40 vorgesehen, so verbessern sich die thermischen Eigenschaften des Prismenrasters 1,2, wobei der Raum 41 zwischen dem Filter 40 und dem Anschliff als Wärmeisolationspolster dient. Wenn der Reflektor 4 als Kaltlichtreflektor ausgebildet ist, d.h. Wärmestrahlen auch durch sich hindurchlässt, reduziert sich abermals die thermische Belastung des Prismenrasters 1,2. Gegebenenfalls kann auch ein entsprechendes Wärmestrahlenfilter vorgeschaltet werden. Wenn der Raum 41 evakuiert ist, verhindert er auch die Abgabe von Konvektionswärme aus der Umgebung der Lichtquelle 3 an den Prismenraster 1,2.

Aus Fig.2 ist ersichtlich, dass die Erhebungen 6a, bzw. 6b etwa L-förmig ausgebildet sind und sich über der geometrischen Mitte der Oberseite des Prismenhalters 5 überschneiden, so dass in länglicher harter Gegenstand, wie beispielsweise die Unterkante eines Schneeräumgerätes, mit voller Kraft über die Beleuchtungsvorrichtung schieben kann, ohne dabei das Glas der Prismenraster 1,2 zu berühren. Die Flächen vor den Prismenrastern 1,2 in Richtung von deren Lichtstrahlen 25 und 26 sind flach ausgebildet, um auch kleine Abstrahlwinkel der Lichtstrahlen 25 und 26 über der Bodenfläche zu ermöglichen.

Fig.3 zeigt eine geringfügig anders ausgestaltete Variante einer Flugfeldbeleuchtung, bei der die Prismenraster 1, 2 derart versetzt sind, dass ihre dem jeweiligen Lichtstrahl 25, bzw. 26 abgewandten Kanten auf einer Linie liegen. Die Erhebungen 6a, 6b sind zu einer Gesamterhebung 6 mit maximaler Höhe 16 von 1-5 mm integriert. Durch diese Anordnung lässt sich der Beleuchtungskörper sehr klein halten. Der Prismenhalter 5a ist mit einem Unterteil 5b durch einen Schrumpfschlauch 33 verbindbar. Der Prismenhalter 5a weist an seinem Umfang eine Nut 19 auf, deren Höhe sich aus der Dicke S eines Seegerringes 18 plus der Höhe 15 zusammensetzt. Der Seegeringer 18 übernimmt die axiale Halterung des Prismenhalters 5a in einem Haltering 17, bzw. in dessen Nut 20. Die Höhe 15 entspricht, wie der Fig. 5 besser entnommen werden kann, der Höhe eines elastischen Ringes 22, der oberhalb des Seegerringes 18 in der Nut 19 angeordnet ist.

Zur drehsicheren Führung des Prismenhalters 5a in dem Haltering 17 weist dieser eine Nut 23 auf, in die eine Feder 24 am Prismenhalter 5a eingreift.

Durch die dargestellten Figuren ist die Erfindung nicht einschränkt. Beispielsweise können die Prismenraster 1, 2 an ihrer Oberseite auch mit einer leichten Schrägung von ca. 1° versehen sein, um den Lichtaustritt zu vereinfachen und um die Selbstreinigung der Oberseite der Prismenraster 1, 2, beispielsweise durch Regen, zu erhöhen. Die Anwendung einer erfindungsgemässen Beleuchtung ist keineswegs auf Flugfelder und Strassen eingeschränkt; so ist beispielsweise eine Anwendung unter Wasser, in Ausstellungshallen als Unterflurbeleuchtung, an Decken, als in diese plan eingebundene Beleuchtungskörper, usw. möglich. Als Glas kommen auch andere Mischungen, ebenso wie Kunststoffe o.dgl. in Frage.

BezugszeichenlistePrismenraster 1 und 2, (Deckel)
Lichtquelle 3,
Reflektor 4,
Prismenhalter 5,
keilförmige Erhebungen 6a, 6b, 6
Oberfläche 8,
Kleber 9,

Borosilikatscheiben 10
Schutzabdeckung 11,
Lotrechte 12
Winkel 13,
Schutzschicht 14,
Federung 15,
Höhe 16,
Haltering 17,
Seegerring 18,
Nut 19,
Nut 20,
Verbreiterung 21,
elastischer Ring 22,
Nut 23,
Feder 24,
Lichtstrahl 25,
Lichtstrahl 26,
Oeffnungen 27 und 28
Rollbahn 29,
Lichteintrittsfläche 30, Anschliff 30a-d
Ausnehmung 31,
elastische Schicht 32,
unterbrochene Leitlinie 33
Fahrbahn 34
Sicherheitsmarkierung 35
geteilte Fahrbahn 36a,36b
Hindernis 37
Bodenmarkierung 138
Trennschicht 38
Metallfolie 39
Filterscheibe 40
Raum 41

**Patentansprüche**

1. Beleuchtungsvorrichtung, insbesondere für den Einbau in einer Fahr- oder Rollbahn an Flugplätzen und Strassen o.dgl. (Rollbahn) mit mindestens einer in einem Gehäuse angeordneten Lichtquelle und einem von der Lichtquelle durchstrahlten glasartigen Deckel für das Abstrahlen zumindest eines winkelgenormten Leuchtkegels, wobei der Deckel mit seiner Lichtaustrittsfläche im wesentlichen in einer Ebene mit der Oberfläche der Rollbahn liegt, dadurch gekennzeichnet, dass die - vorzugsweise reflexionsmindernd beschichtete - Lichteintrittsfläche (30) einteilig und in einer einzigen Ebene liegend ausgebildet ist, dass die Lichtquelle (3) mit einem Reflektor (4) versehen ist, der im wesentlichen parallele Lichtstrahlen abzustrahlen vermag, dass der Reflektor (4) mit der Lichtquelle (3) derart angeordnet ist, dass die Lichtstrahlen in einem im wesentlichen rechten Winkel durch die Ebene der Lichteintrittsfläche (30) treten, und dass der Deckel (1,2) in mehrere voneinander durch je eine parallel zur Lichtrichtung verlaufende Trennschicht (38) getrennte Scheiben (10) unterteilt ist.

2. Beleuchtungsvorrichtung nach Anspruch 1, dadurch gekennzeichnet, dass zwei Deckel (1,2) in Oeffnungen (27,28) eines flachen Prismenhalters (5) - z.B. aus Aluminiumguss - so eingesetzt sind, dass die Ebenen ihrer Lichteintrittsflächen (30) einen Winkel einschliessen, der dem Doppelten jenes Winkels entspricht, den jede Ebene mit der Lotrechten (12) einschliesst, dass die Deckel (1,2) seitlich im Bezug auf die Lichtstrahlen gegeneinander versetzt sind, und dass unter jedem Deckel (1,2) eine Lichtquelle (3) angeordnet ist. (Fig.1 bis 3)

3. Beleuchtungsvorrichtung nach Anspruch 2, dadurch gekennzeichnet, dass die Oberfläche der Oberseite des Prismenhalters (5) zumindest in Richtung zum Deckel (1,2) und in Richtung des Lichtstrahles, sowie gegebenenfalls auch seitlich der Deckel (1,2) keilförmig entgegen dem Lichtstrahl und/oder senkrecht in Richtung auf diesen ansteigend ausgebildet ist. (Fig.1 bis 4)

4. Beleuchtungsvorrichtung nach einem der vorhergehenden Ansprüche, dadurch gekennzeichnet, dass die Lichteintrittsfläche (30) einen gekrümmten Schliff (30a-d), vorzugsweise einen Zylinderschliff, aufweist, der gegebenenfalls konvex (Fig.10,12) ausgebildet ist und dessen Radius im wesentlichen zwischen 20 und 220 mm liegt und durch den gewünschten Streuwinkel bestimmt ist, wobei die Achse des Zylinders im wesentlichen normal zu den Trennschichten (38) bzw. deren Erstreckungsebenen liegt und der Schliff (30c,d) gegebenenfalls nur im Bereich des mittleren Drittels des Deckels (1,2) ausgebildet ist. (Fig.9 bis 12)

5. Beleuchtungsvorrichtung nach einem der vorhergehenden Ansprüche, dadurch gekennzeichnet, dass wenigstens die beiden äusseren Trennschichten (38) je eine Metallfolie (39), vorzugsweise mit einer Dicke von 0,1 mm, aus z.B. Aluminium enthalten, die gegebenenfalls zumindest an einer Seite die räumliche Erstreckung des Deckels (1,2) überragt und dabei - insbesondere zwischen dem Deckel (1,2) und dem Prismenhalter (5) - abgebogen und eingeklemmt und/oder eingeklebt ist. (Fig.13)

6. Beleuchtungsvorrichtung nach einem der vorhergehenden Ansprüche, dadurch gekennzeichnet, dass als Kleber (9) für die Scheiben (10) des Deckels (1,2) bzw. für die Metallfolie (39) ein wärmehärtbarer Einkomponentenkleber auf Epoxydbasis mit einer Schlagscherfestigkeit von 30-40 N/mm², einer Zugscherfestigkeit von 30-60 N/mm² und einer Schälfestigkeit, gemessen nach dem Boingverfahren, von 10-13 N/mm vorgesehen ist, und wobei zumindest eine Fläche (27a,28) im Prismen halter (5) für die Aufnahme jedes Deckels (1,2) einen Winkel (13) von etwa 45 Grad zur Lotrechten aufweist.

7. Beleuchtungsvorrichtung nach einem der vorhergehenden Ansprüche, dadurch gekennzeichnet, dass zwischen der Lichteintrittsfläche (30) und der Lichtquelle (3) eine - vorzugsweise planparallele - Filterscheibe (40) für Farblicht- und/oder Wärmestrahlung angeordnet ist, wobei gegebenenfalls der Raum (41) zwischen der Filterscheibe (40) und der Eintrittsfläche (30a) gasdicht abgeschlossen und insbesondere evakuiert ist. (Fig.8,9)

8. Beleuchtungsvorrichtung nach einem der vorhergehenden Ansprüche, dadurch gekennzeichnet, dass der Reflektor (4) als - vorzugsweise rotationssymmetrischer - Parabolreflektor ausgebildet und/oder für langwellige Wärmestrahlen durchlässig ist. (Fig.3)

9. Beleuchtungskörper nach einem der vorhergehenden Ansprüche, dadurch gekennzeichnet, dass der Prismenhalter (5) in senkrechter Richtung federnd gehalten ist, wobei der Federweg (15) höchstens der maximalen Höhe (16) der Erhebungen (6a,6b) entspricht (Fig. 1,3 und 5), wobei er in einem Haltering (17) mittels axialgerichteter Nut (23) und Feder (24) verdrehsicher gehalten ist.

10. Beleuchtungskörper nach Anspruch 9, dadurch gekennzeichnet, dass der Prismenhalter (5) in einem Haltering (17) verriegelt gehalten ist, wobei als Verriegelungselement ein Seegerring (18) vorgesehen ist, der in gegengleichen Nuten (19,20) im Prismenhalter (5), bzw. im Haltering (17) anordenbar ist, wobei vorzugsweise zumindest eine der Nuten (19) zumindest um das Mass der maximalen Höhe (16) der keilförmigen Erhebung (6a,6b) breiter als der Seegerring (18) ausgebildet ist, und dass in dieser Verbreiterung (21) ein elastischer Ring (22), vorzugsweise aus elastomerem Material, angeordnet ist (Fig. 3 und 5).

11. Verwendung eines Beleuchtungskörpers, gegebenenfalls für Signalzwecke, nach einem der vorhergehenden Ansprüche als integrierter Bestandteil - vorzugsweise im Bereich von Bodenmarkierungen (138) - an Fahrbahnen (34) für den öffentlichen Verkehr mit Kraftfahrzeugen. (Fig.6,7)

Fig.1

Fig.2

Fig. 3

Fig. 4

Fig. 5

Fig. 6

Fig.7

0284562

Fig 8

10

XIII

4

38

40

30a

4

XIII

Fig 9

10

38

30a

41

40

Fig 11

30c

Fig 10

10

30b

Fig 12

30d

Fig 13

38

39

5

9

1(2)